# EUROPEAN PATENT APPLICATION

(11) **EP 0 753 430 A2**
(43) Date of publication of application: **15.01.1997**
(21) Application number: 96850115.5
(22) Date of filing: 20.06.1996
(51) Int. Cl.: B60R 1/06

(54) **Outside mirror apparatus for large-sized vehicle**

(30) Priority: 14.07.1995 JP 178676/95
(71) Applicant: Mirror Industrial Corporation, Kanazawa-shi, Ishikawa-ken (JP)
(72) Inventor: Takayama, Hidenori, Minamikanbara-gun, Niigata-ken (JP)
(74) Representative: Willquist, Bo

(57) **Abstract**

An outside mirror apparatus for rear-vision and confirmation of the positional relationship between the back of vehicle and the surroundings thereof. A mirror 11 is supported by supporting rods 8. The supporting rods 8 are telescopic and drived by a telescopic motion driving means 13. Owing to the driving means 13, the supporting rods 8 are extended or shrinked. When vehicle turns around a corner, the positional relationship between the back of the vehicle and the surroundings thereof can be seen with the mirror 11, thus enhancing safety in driving the same.

## Description

### BACKGROUND OF THE INVENTION

### (a) Field of the Invention

The present invention relates to an outside mirror apparatus for large-sized vehicle, such as a truck trailer, giant dump car, crane, snowremoving car, asphalt finisher or the like.

### (b) Description of Prior Art

An outside or rearview mirror provided for vehicle plays an important role in confirming safety in a rearward direction when driving vehicle back or forth. In the past, there has been proposed an outside mirror of which the angle can be adjusted with an electrically actuated means. According to such prior outside mirror, after the adjustment of a driver's seat position, the outside mirror would be oriented so as to make a certain range of his back visible. In the case of large-sized vehicle such as a truck trailer, its back portion such as a loading platform is inevitably greatly tilted relative to the driving seat when turning around a corner, so that the outside mirror of the tilted side would reflect only the side of the loading platform. As a result, a driver neither could see the sides or back of the back portion of the vehicle, nor confirm the positional relationship between the back portion of vehicle and the surroundings thereof.

### SUMMARY OF THE INVENTION

To eliminate the above-mentioned problems, it is, therefore, a main object of the present invention to provide an outside mirror apparatus for large-sized vehicle with which a driver can see the rearward direction and confirm the positional relationship between the back of the vehicle and the surroundings thereof to ensure safety driving.

According to a major feature of the present invention, there is provided an outside mirror apparatus for large-sized vehicle comprising: one or more supporting rods protruded from one side of a driving seat of the vehicle, said supporting rods being telescopic; an outside mirror body supported by said one or more supporting rods; a telescopic motion driving means for extending or shrinking said supporting rods.

### BRIEF DESCRIPTION OF THE DRAWINGS

Other objects, features and advantages of the invention will be apparent to those skilled in the art from the following description of the preferred embodiments of the invention, wherein reference is made to the accompanying drawings, of which:

Fig.1 is a plan section showing an outside mirror apparatus of a first embodiment of the invention.

Fig.2 is a plan view showing a vehicle having an outside mirror apparatus of a first embodiment of the invention.

Fig.3 is a front view showing a vehicle having an outside mirror apparatus of a first embodiment of the invention.

Fig.4 is a plan section showing an outside mirror apparatus of a second embodiment of the invention.

### DETAILED DESCRIPTION OF THE PREFERRED EMBODIMENTS

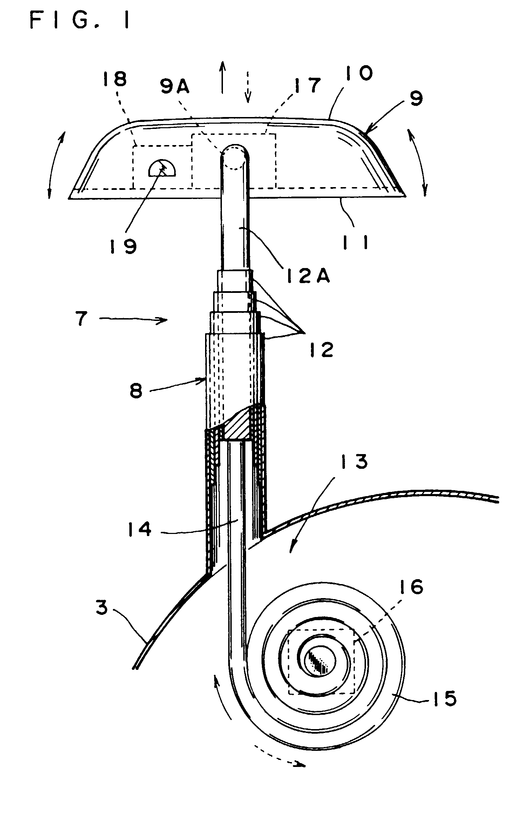

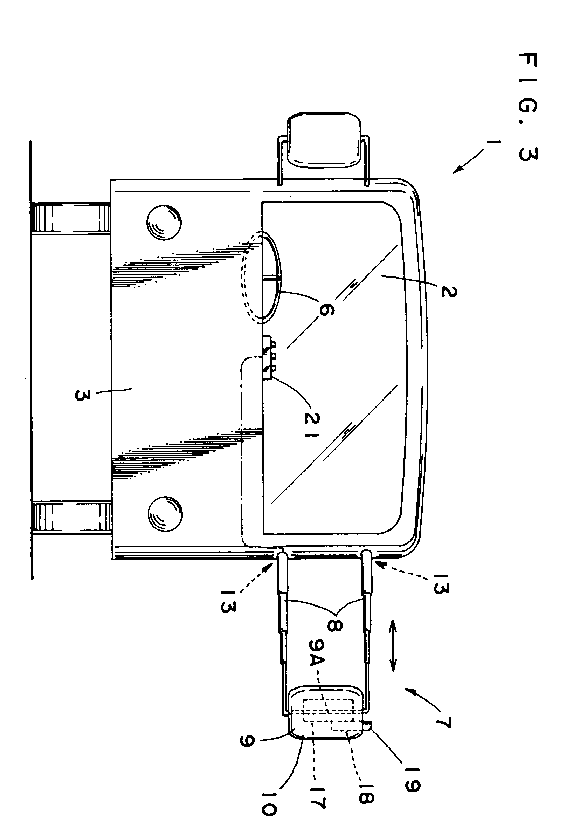

Hereinafter is described a first embodiment of an outside mirror apparatus of the invention with reference to Figs.1 to 3, in which is illustrated an outside mirror of the invention provided for a truck trailer as a typical large-sized vehicle.

Reference numeral 1 designates a truck trailer. comprising a front part thereof or a truck body 3 having a driving seat 2, and a back part thereof or a trailer 4. The truck body 3 has an engine (not shown) mounted thereon, and is connected to the trailer 4 at the back thereof via a pivotable connector 5. In this example, at the right side of the truck body 3 is provided a handle 6 as well as the driving seat 2, while at the other side thereof, i.e, the left side thereof is provided an outside mirror apparatus 7. The outside mirror apparatus 7 comprises an electrically actuated mirror body 9, which is provided at the distal ends of vertically paired supporting rods 8 extending sidewise from the front side of the truck body 3.

The mirror body 9 comprises a hollow cover portion 10 and a rearview mirror 11 provided at the back thereof. The aforesaid supporting rods 8 are of telescopic boom type, having a plurality of pipe-like telescopic portions 12, where into the telescopic portions at relatively proximal sides are slidably inserted those at the relatively distal sides one after another, and then into the telescopic portions at the most distal side are slidably inserted distal rods 12A respectively, to which is connected the mirror body 9 via a rotational axis 9A longitudinally provided. Each proximal end of the telescopic portions 12 and distal rods 12A is provided with a stopper (not shown).

A telescopic motion driving means 13 for the telescopic rods 8 is provided in such a manner that the proximal ends of the distal rods 12A are connected to driving force transmission bands 14 having preset strength and flexibility, then the proximal ends thereof are wound up around a reel 15 by a motor 16 along a certain guide (not shown), said reel 15 being mounted in the truck body 3. With such action, the aforesaid distal rods 12A are drawn in, while the telescopic portions 12 are also drawn in in sequence towards the proximal end to withdraw the supporting rods 8. On the other hand, when the motor 16 is reversely rotated to push the driving force transmitting bands 14 out of the reel 15 along the guide (not shown), the distal rods 12A are moved forth, thereby extending the telescopic portions 12 in sequence to extend the aforesaid supporting rods 8.

The cover body 10 is integrated with an electric angle adjustment mechanism 17 for adjusting an angle of the mirror 11 by control of an angle of the mirror body 9 to the supporting rods 8. The angle adjustment mechanism 17 is integrated with a motor (not shown) for adjusting the angle of the electric mirror body 9 to the supporting rods 8 around the rotational axis 9A, both lengthwise and sidewise, said mechanism 17 further comprising a control unit 18 connected thereto, said control unit 18 having a receiver 19 which receives electromagnetic waves such as laser.

At a reference position at the left corner of the back of said trailer 4 is provided a transmitter 20 to transmit electromagnetic waves such as laser towards the outside mirror apparatus 7. Where necessary, said transmitter 20 may be provided with an automatic follow-up system so that electromagnetic waves may be transmitted toward said receiver 19.

The receiver 19 detects electromagnetic waves trasmitted from the transmitter 20 to produce detection signals. With the detection signals, the control unit 18 detects the position of the transmitter 20, thereby actuating the aforesaid angle adjustment mechanism 17, so that the angle of the mirror 11 can be adjusted for a driver to be able to see the side of the back of the trailer 4. Further, at the aforesaid driving seat 2 is provided an operating portion 21 for actuating the outside mirror apparatus 7, said operating portion 21 comprising a telescopic motion operating button for moving the supporting rod 8 back or forth by driving the aforesaid telescopic motion driving means 13, an angule adjustment button for adjusting the angle of the mirror 11 by driving the angle adjustment mechanism 17 and an automated angle adjustment button for automatically adjusting the angle of the mirror 11 by actuating the aforesaid transmitter 20 and the control unit 18.

Next, it will be explained hereinfter how the above-structured outside mirror apparatus 7 is operated.

A driver, after he seats himself on the driving seat 2, can operate the angular adjustment button of the operating portion 21 so as to adjust the angle of the mirror 11 with respect to both of the horizontal and the vertical planes. thereby adjusting the range of vision reflected on the mirror 11. Likewise, he can also operate the telescopic motion operating button of the operating portion 21 to move the supporting rods 8 toward or away from the truck body 3, thereby adjusting the range of vision reflected on the mirror 11.

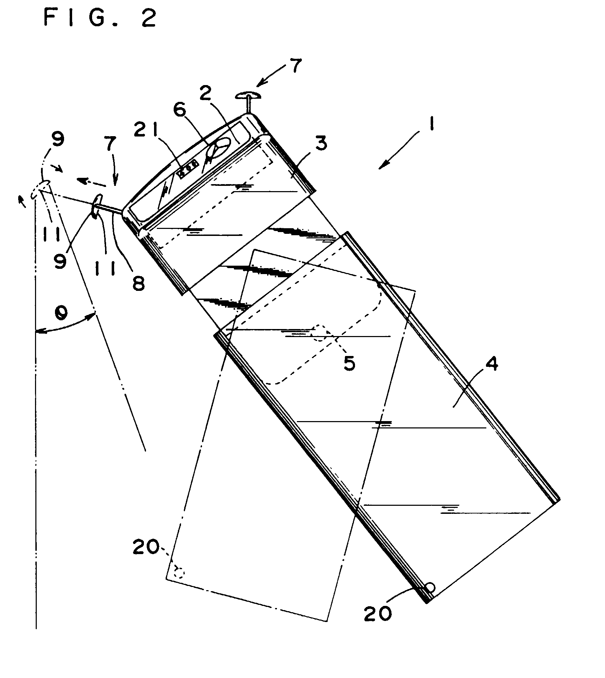

For example, as illustrated in Fig.2, when turning to the left on a relatively narrow road or moving backward for garaging by rotating the handle 6 anti-clockwise, it is inevitable for large-sized vehicle to have its trailer 4 positioned obliquely in plane relative to the truck body 3. However, if the supporting rods 8 are extended to move the mirror 11 a longer distance away from the driving seat 2, the range of vision reflected on the mirror 11 will be shifted, thus enabling the seeing of the back of the trailer 4 and the left side of the back of the trailer 4.

Alternatively, prior to turning to the left or moving backward with the handle 6 being rotated anti-clockwise, the telescopic rods 8 may be extended, switching on the automatic angle adjustment button of the operating portion 21 in advance where necessary. Then, when a plane angle of the truck body 3 to the trailer 4 will vary, depending on an extent that the vehicle bends, the mirror 11 will be automatically oriented to the trasmitter 20, so that a driver can see the surroundings of the side of the back of the trailer 4, within the vision range theta as illustrated in Fig.2. On the other hand, when moving backward, rotating the handle 6 clockwise, contrary to Fig.2, the trailer 4 will bend in the right direction, so that the left side of the truck body 3 will be an obstacle to view to make the left side of the back of the trailer 4 invisible. In that case, if the supporting rods 8 are extended, the left side of the trailer 4 can be seen through the reflection on the mirror 11.

According to a first embodiment of the invention, owing to the telescopic motion of the supporting rods 8 by means of the telescopic motion driving means 13, even when a back part of vehicle is bent in moving backward or forth, the surroundings of one side of the back part thereof can be seen, permitting the confirming of the positional relationship between the surroundings and the back part thereof by means of the outside mirror 11, thus ensuring a safety driving. Namely, according to the prior outside mirror, the back part of vehicle would be an obstacle to view, so that vehicles passing in the rear positions and the surroundins thereof would be out of the range of sight. According to the outside mirror apparatus of the invention, however, the mirror 11 enables the confirming of safety passage in the rear positions toward which vehicle turns.

Particularly, a first embodiment of the invention is advantageous in that the angle adjustment mechanism 17 enables easy adjustment of the orientation of the mirror 11 from the position of the driving seat 2. Further, since the transmitter 20 provided at the back part of vehicle, the receiver 19 is provided for receiving the transmitted electromagnetic waves and the control unit 18 is able to atumatically adjust the angle of the mirror 11 to reflect one side of the back part of the vehicle, even if the plane angle of the front part of the vehicle to the back part thereof varies depending on the extent of the rotation of the handle 6, the surroundings of the back part of the vehicle can be seen with the use of the outside mirror 11. In addition, as the outside mirror apparatus 7 is provided at the opposite side of the drving seat 2, i.e., the left side thereof, the left corner of the back part of the vehicle can be seen, sitting on the driving seat 2, in the case of moving back or forth, rotating the handle 6 anti-clockwise.

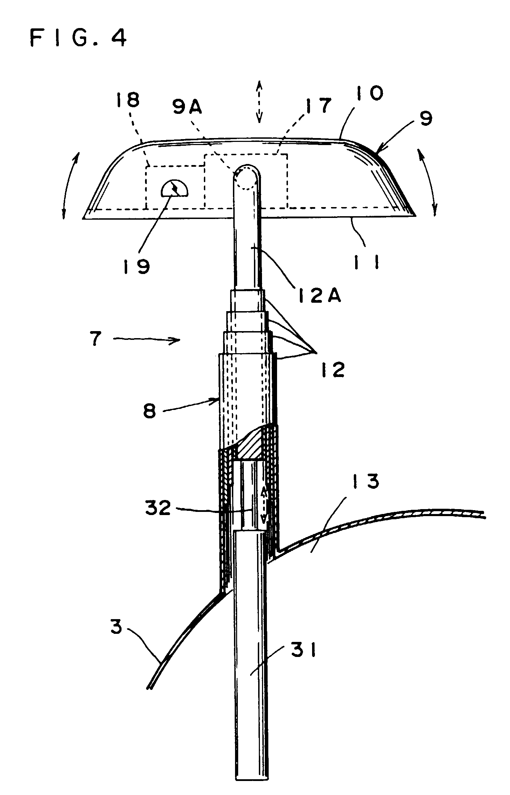

Referring to Fig.4, showing a second embodiment of the invention, the same portions as those described in a first embodiment will be designated as common reference numerals, and their repeated detailed descriptions will be omitted.

In a second embodiment, an air cylinder is used for the telescopic motion driving means, wherein the aforesaid distal rod 12A is connected to a telescopic rod 32 of the air cylinder 31, then the telescopic motion operating button of the operating portion 21 is switched on so as to extend or shrink the telescopic rod 32, thereby adjusting the position of the mirror 11 to attain the same action and effect as those of a first embodiment.

Incidentally, the present invention should not be limited to the foregoing embodiments, but may be modified within a technical scope of the invention. For example, the telescopic motion driving means may be of various types other than the electric motor or the air cylinder, such as a hydraulic cylinder or the like. Further, instead of the telescopic rods comprising a pair of the upper rod and the lower rod in the foregoing embodiments, a single telescopic rod may be used for mounting the mirror thereto. In addition, though the embodiments show that the angle of the electric mirror body is adjusted through the angle adjustment mechanism, it may be so structured that the angle of the mirror itself to the electric mirror body may be adjusted.

## Claims

1. An outside mirror apparatus for large-sized vehicle comprising:
one or more supporting rods protruded from one side of a driving seat of the vehicle, said supporting rods being telescopic;
an outside mirror body supported by said one or more supporting rods;
a telescopic motion driving means for extending or shrinking said supporting rods.

2. An outside mirror apparatus for large-sized vehicle according to claim 1, further comprising:
an electric angle adjustment mechanism for adjusting an angle of said mirror body.

3. An outside mirror apparatus for large-sized vehicle according to claim 2, wherein said mirror body comprises a hollow cover body and a mirror provided at the back of the cover body, said cover body housing said angle adjustment mechanism therein.

4. An outside mirror apparatus for large-sized vehicle according to claim 2, wherein said mirror body is provided at the opposite side relative to the driving seat.

5. An outside mirror apparatus for large-sized vehicle according to claim 4, wherein said large-sized vehicle comprises a front portion having said driving seat, a back portion provided at the back of said front portion and a pivotable connector for link between said front and back portions.

6. An outside mirror apparatus for large-sized vehicle according to claim 5, wherein each of said telescopic rods comprises a plurality of pipe-like telescopic portions and a distal rod slidably inserted into said pipe-like telescopic portions, said distal rod having said mirror body rotatably mounted to its distal end.

7. An outside mirror apparatus for large-sized vehicle according to claim 6, wherein said telescopic motion driving means comprises a driving force transmitting flexible band, a reel mounted to said front portion of the vehicle and a motor for winding a proximal portion of said driving force transmitting band, so that said supporting rods can be extended or shrinked through a forward or reverse rotation of said motor.

8. An outside mirror apparatus for large-sized vehicle according to claim 6, wherein said telescopic motion driving means is an air cylinder.

9. An outside mirror apparatus for large-sized vehicle according to claim 5, further comprising a transmitter provided in said back portion of the vehicle and a control unit for actuating said angle adjustment mechanism.

10. An outside mirror apparatus for large-sized vehicle according to claim 9, wherein said control unit is provied so as to adjust an angle of said mirror body in order that a driver at the driving seat can see the side of the back portion of the vehicle.
